# FASCICULE DE BREVET EUROPEEN

(11) **EP 0 676 322 B1**
(45) Date de publication et mention de la délivrance du brevet: **13.05.1998**
(21) Numéro de dépôt: 95103313.3
(22) Date de dépôt: 08.03.1995
(51) Int. Cl.: B61K 9/10, G01N 29/26

(54) **Dispositif de mesure par ultrasons des défauts d'un rail d'une voie ferrée**
Ultraschall-Messvorrichtung für Fehler einer Eisenbahnschiene
Ultrasonic measuring device of defaults of a railway rail

(30) Priorité: 06.04.1994 CH 1003/94; 20.12.1994 CH 3843/94
(43) Date de publication de la demande: 11.10.1995
(73) Titulaire: SPENO INTERNATIONAL S.A., CH-1211 Genève 21 (CH)
(72) Inventeur: Jaeggi, Jean-Pierre, CH-1205 Genève (CH)
(74) Mandataire: Micheli & Cie

(56) Documents cités:
- EP-A- 0 160 591
- EP-A- 0 164 168
- US-A- 4 468 966

## Description

La présente invention concerne un dispositif de mesure des défauts internes des rails d'une voie ferrée et plus particulièrement un dispositif à ultrasons destiné à travailler en voie. Les dispositifs permettant d'analyser un corps grâce à un faisceau d'ultrasons sont bien connus et sont utilisés pour la mesure des défauts internes des rails d'une voie ferrée aussi bien en voie qu'en atelier. Selon ce principe, un faisceau d'ultrasons est émis en direction du rail par une sonde placée sur la table de roulement du rail, l'énergie réfléchie par le rail et ses défauts est ensuite détectée, puis mesurée par des circuits électroniques adéquats. Les brevets US 4.662.224 et US 4.700.574 divulguent des méthodes de mesure ainsi que des dispositifs pour leur mise en oeuvre. Il est essentiel pour obtenir une mesure fiable de tous les défauts du rail d'assurer le meilleur contact sonore possible entre la sonde et le rail.

La position géométrique des rails n'est jamais parfaite et les défauts d'alignement, les déformations ponctuelles ou des discontinuités du rail ont pour effet de faire sauter les sondes sur le rail et de ce fait de faire perdre la liaison acoustique pertubant ainsi les mesures. Ces perturbations sont d'autant plus importantes que la vitesse de travail est élevée. Les appareils de voie, comme les aiguillages par exemple, constituent des discontinuités importantes et imposent des contraintes élevées aux sondes pouvant conduire à l'arrachement de ces dernières lors du passage du véhicule de mesure.

Les chariots d'auscultation existants comportent une dizaine de sondes par files de rails pour assurer un contrôle complet de tous les défauts du rail. Ces sondes sont en général portées par une poutre commune entraînée et guidée le long du rail par des moyens adéquats. Vu la longueur nécessaire de cette poutre de support, sa masse et le nombre de sondes portées, il est extrêmement difficile de garantir constamment un contact sonde-rail parfait pour toutes les sondes et de ce fait ces dispositifs ne sont pas adaptés à l'auscultation des rails à des vitesses élevées.

Le but de la présente invention est d'obvier aux inconvénients cités précédemment. La titulaire propose à cet effet un dispositif de mesure par ultrasons destiné à être monté sous un véhicule ferroviaire qui garantit un contact sonore parfait entre chaque sonde et le rail. Ce dispositif permet également d'éviter que les sondes ne soient endommagées lors du passage sur des discontinuités importantes des rails. Il est ainsi possible grâce au dispositif objet de la présente invention d'effectuer des mesures fiables de tous les défauts internes d'un rail à des vitesses élevées, de l'ordre de 100 Km/h.

La présente invention a pour objet un dispositif de mesure muni de sondes ultrasonores qui se distingue par les caractéristiques énumérées à la revendication 1. D'autres avantages ressortent des caractéristiques exprimées dans les revendications dépendantes et de la description détaillée de l'invention.

Le dessin annexé illustre schématiquement et à titre d'exemple deux formes d'exécution du dispositif de mesure selon la présente invention.

La figure 1 est une vue de côté en coupe partielle du dispositif de mesure selon la présente invention.

La figure 2 est une vue partielle de dessus du dispositif illustré à la figure 1.

La figure 3 est une vue de dessus de la semelle du dispositif illustré à la figure 1.

La figure 4 est une vue de côté de plusieurs dispositifs de mesure selon la présente invention, montés sous un véhicule ferroviaire.

La figure 5 est une vue de côté en coupe partielle d'une seconde forme d'exécution de la partie inférieure du dispositif de mesure.

La figure 6 est une vue de dessus du dispositif illustré à la figure 5.

La figure 7 est une vue schématique de côté d'un véhicule ferroviaire comportant le dispositif de mesure objet de la présente invention.

La figure 8 est une vue de côté d'un dispositif de nettoyage d'une file de rails en position relevée.

La figure 9 est une vue de côté du dispositif illustré à la figure 8 en position de travail.

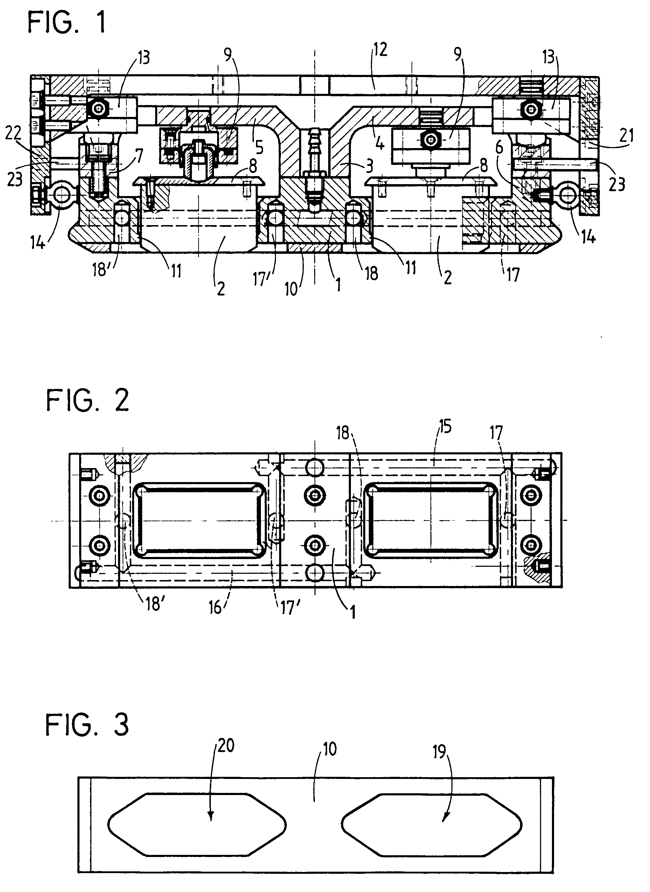

La figure 1 illustre le dispositif de mesure par ultrasons qui comporte un patin 1 comprenant deux logements dans lesquels peuvent coulisser verticalement des sondes ultrasonores 2. La partie supérieure du patin 1 comporte un montant central 3 muni de deux bras latéraux 4,5 reliant respectivement le montant avant 6 et le montant arrière 7 du patin 1. Chaque sonde 2 est montée sous une plaque de support 8. Ces plaques de support 8 sont reliées aux bras latéraux 4,5 par l'intermédiaire de vérins à pression ajustable 9. Ces vérins 9 permettent d'appuyer les sondes 2 contre le rail avec une force déterminée. La pression d'appui délivrée par ces vérins 9 peut être asservie à la vitesse d'avancement du dispositif. Plus la vitesse est élevée, plus grande sera la pression avec laquelle il faut appliquer les sondes sur le rail pour éviter qu'elles ne sautent. En lieu et place des vérins 9 on peut prévoir des ressorts tarés. La course verticale des sondes est limitée vers le bas par les plaques de support 8 dont les dimensions sont plus grandes que celles des logements dans lesquels coulissent les sondes 2. On évite ainsi qu'une sonde 2 ne tombe au passage d'une discontinuité importante du rail, comme le coeur d'un aiguillage par exemple. Une semelle 10 munie de découpes qui correspondent aux logements du patin 1 est fixée par des vis (non illustrée) sous le patin 1. Cette semelle généralement réalisée en matière plastique permet au patin de glisser sur le rail en réduisant les frottements et l'usure. Les logements dans lesquels coulissent les sondes 2 présentent dans leur partie basse, juste en dessus de la semelle 10, un léger épaulement 11 qui assure un guidage longitudinal et transversal des sondes par rapport au rail.

La partie supérieure du patin 1 est reliée à un cadre constitué d'une poutre de support 12 sur laquelle sont fixées deux plaques latérales, une plaque avant 21 et une plaque arrière 22. Les montants verticaux du patin 1 avant 6 et arrière 7 sont reliés par l'intermédiaire de deux vérins 13 à la poutre de support 12. Ces vérins 13 permettent d'appliquer la semelle 10 du patin 1 contre le rail avec une force déterminée et de relever le patin lors de la marche haut-le-pied par exemple. Des anneaux déformables 14 réalisés en caoutchouc relient respectivement les montants verticaux avant 6 et arrière 7 du patin 1 aux plaques avant 21 et arrière 22 du cadre. Ces anneaux déformables 14 permettent l'entraînement du patin dans le sens de la marche. Ils permettent également d'amortir les vibrations des sondes 2 et du patin 1 lors de l'avance du dispositif. Les anneaux déformables 14 peuvent être remplacés par tout organe élastique, comme des ressorts ou des silent-bloc. Des goupilles 23 montées dans les montants avant 6 et arrière 7 du patin 1 coulissent verticalement dans des logements pratiqués dans les plaques avant 21 et arrière 22 du cadre. Ces logements se présentent sous la forme d'une fente verticale dont la largeur correspond au diamètre des goupilles 23. Ces goupilles 23 assurent de ce fait à la fois un guidage latéral du patin par rapport au cadre et une limitation de la course du patin vers le bas lors de son déplacement par rapport au cadre sous l'action des vérins 13.

Le patin 1 comporte des conduits de distribution 15 et de récupération 16 d'eau situés dans le corps du patin 1 comme illustré à la figure 2. Le conduit 15 d'amenée d'eau débouche grâce à des canaux 17,17' à l'avant des sondes 2 dans une chambre constituée par la découpe de la semelle 10. Le conduit 16 de récupération d'eau débouche par des canaux 18,18' à l'arrière de chaque sonde 2 dans une chambre constituée par la découpe de la semelle 10. Il est ainsi possible d'amener par les canaux 17,17' de l'eau dans la chambre située à l'avant des sondes de sorte qu'un film d'eau se forme entre la sonde 2 et le rail, garantissant de ce fait un excellent contact sonore entre la sonde et le rail.

La figure 3 illustre la forme des découpes pratiquées dans la semelle 10 et donc la configuration des chambres qu'elles définissent à l'avant et à l'arrière des sondes. Ces découpes 19,20 reproduisent la forme rectangulaire des sondes dans leur partie centrale pour permettre le passage de la sonde 2 et se prolongent vers l'avant et vers l'arrière par une découpe en forme de triangle. La forme triangulaire de ces découpes favorise une distribution uniforme de l'eau à l'avant des sondes et permet de concentrer l'eau à récupérer vers les canaux de récupération 18,18' à l'arrière des sondes 2. Grâce à cette configuration, il est possible non seulement de garantir un bon contact sonore sonde-rail, mais également la récupération d'une grande quantité d'eau, ce qui augmente l'autonomie de l'installation de mesure en voie. La forme symétrique du dispositif et des découpes de la semelle permet l'utilisation du dispositif aussi bien en marche avant qu'en marche arrière. On veillera lors du changement du sens de marche à permuter les alimentations des conduits 17,17' 18,18'.

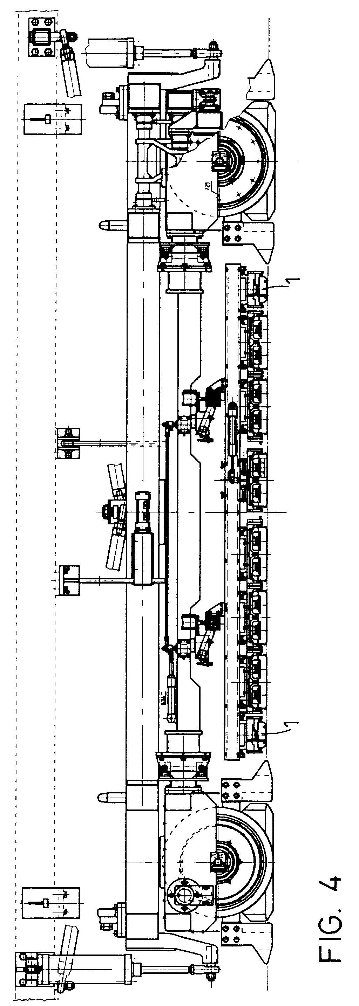

La figure 4 est une vue de profil illustrant un chariot d'auscultation monté sous un véhicule ferroviaire et comportant plusieurs unités de mesure objet de la présente invention.

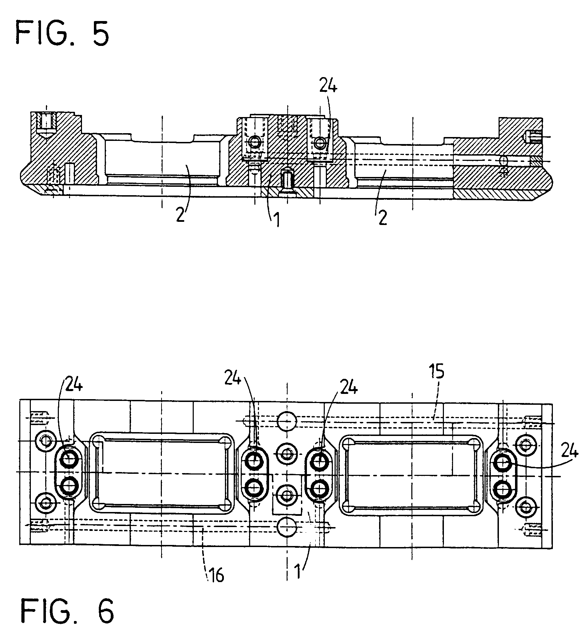

Dans le but d'une part d'économiser l'eau nécessaire au fonctionnement de l'installation de mesure et de ce fait d'augmenter l'autonomie de cette dernière, et d'autre part, d'améliorer le contact entre la sonde et le rail, il est proposé une seconde forme d'exécution du dispositif de mesure portant les sondes. Cette seconde forme d'exécution va être décrite en référence aux figures 5 et 6. Les conduits d'amenée 15 et de récupération 16 d'eau alimentent des buses de giclage 24. Ces buses de giclage 24 ont un diamètre d'ouverture d'environ 0,4 mm et fonctionnent à une pression comprise entre 10 et 15 bars. Elles permettent la formation d'un cône d'eau finement pulvérisée. Le cône d'eau ainsi formé a une ouverture d'environ 35° et la distance entre la base du cône et l'ouverture de la buse 24 est d'environ 15 mm. Grâce au dimensionnement et à l'orientation de ces buses 24, il est possible de former le film d'eau nécessaire au bon contact sonde-rail de façon optimale. En effet la périphérie de la base du cône d'eau formé par ces buses 24 se trouve directement en contact avec le rail et favorise la formation d'un film d'eau uniforme sur le champignon du rail. Le réglage du débit des buses 24 peut être asservi à la vitesse d'avancement du dispositif, ce qui permet la formation d'un film d'eau optimal. Il est ainsi possible de réduire encore la consommation d'eau par rapport à la première forme d'exécution illustrée aux figures 1 à 3.

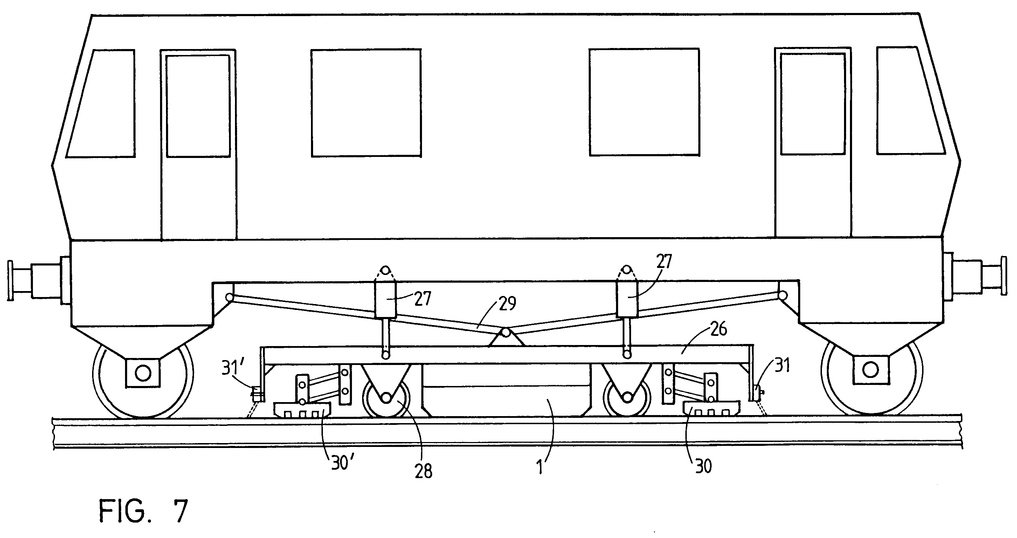

La figure 7 illustre de façon schématique un véhicule ferroviaire portant un chariot d'auscultation 26 comportant un ensemble d'unités de mesures 1. Ce chariot 26 comporte également des moyens de relevage constitués de vérins hydrauliques 27 qui permettent la marche haut-le-pied de l'installation. Ce chariot 26 est également relié au châssis du véhicule ferroviaire par l'intermédiaire de timons 29 qui permettent l'entraînement du chariot 26 dans le sens de marche voulu. Ce chariot de mesure 26 est extensible transversalement et comporte des moyens (non représentés) permettant de plaquer les roues à boudins 28 contre le flanc intérieur du rail assurant de ce fait un guidage latéral et transversal adéquat du chariot d'auscultation 26. De part et d'autre du dispositif comportant les unités de mesure 1, on trouve un dispositif de nettoyage du rail 30,30' qui sera décrit plus en détail ci-dessous. Situées devant les dispositifs de nettoyage du rail 30,30, dans le sens de la marche, et montées sur le chariot 26 on trouve des buses de nettoyage 31,31'. Ces buses de nettoyage 31,31' sont alimentées en eau à une pression d'environ 100 bars et permettent d'éliminer les déchets ou la poussière se trouvant sur le rail avant le passage des unités de mesure 1. Les buses 31,31' sont agencées de façon à gicler le rail avec un angle d'environ 15° par rapport à l'axe vertical.

Le circuit général de distribution d'eau comporte une pompe à piston capable de délivrer l'eau nécessaire à une pression maximale d'environ 180 bars depuis un réservoir d'eau situé sur le véhicule ferroviaire. Le circuit de distribution d'eau alimente directement un premier circuit à haute pression qui délivre l'eau aux buses de nettoyage 31,31' et, par l'intermédiaire d'un réducteur de pression un second circuit de distribution qui alimente les buses de giclage 24 pour former le film d'eau à la surface du rail à une pression d'environ 15 bars.

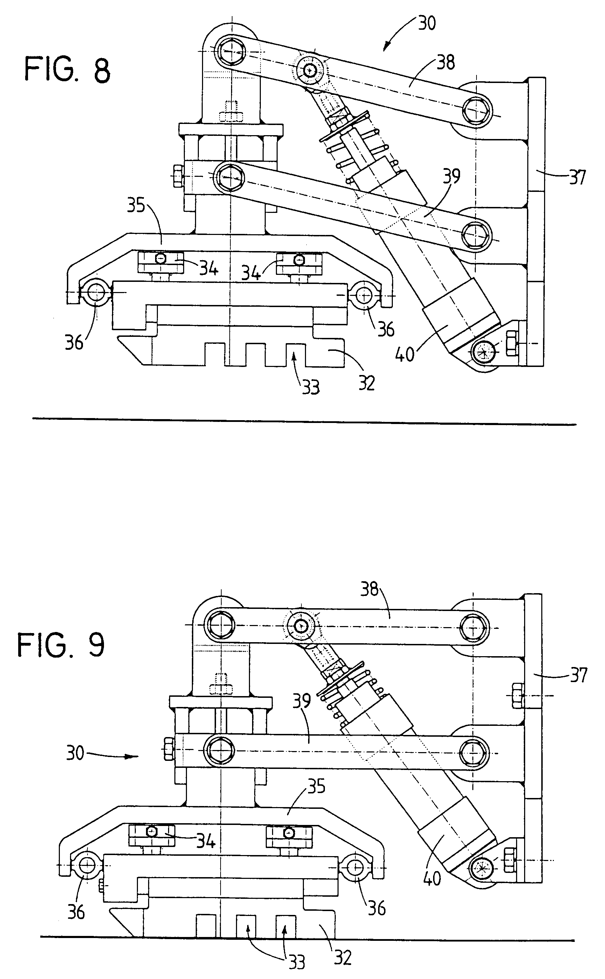

Des essais en voie ont montré qu'il n'était pas possible d'éliminer complètement les déchets sur le rail uniquement à l'aide des buses de nettoyage 31,31' c'est pourquoi les dispositifs de nettoyage 30,30' ont été agencés derrière les buses de nettoyage 31,31'. Ces dispositifs de nettoyage vont maintenant être décrits en référence aux figures 8 et 9.

Le dispositif de nettoyage illustré à la figure 8 comporte un sabot 32 muni de fentes 33, monté par l'intermédiaire de vérins à pression ajustable 34 dans un berceau 35. Les vérins 34 permettent d'ajuster de façon précise la force de contact entre le sabot 32 et le rail. Ce sabot 32 est entraîné dans le sens de marche grâce à des anneaux déformables 36 qui ont également pour fonction d'amortir les vibrations du sabot 32. Le berceau 35 est relié à une plaque de fixation 37 qui est montée sous le chariot 26 par l'intermédiaire de deux bielles 38,39 pivotées à l'une de leur extrémité dans la partie supérieure du berceau 35 et à leur autre extrémité dans la plaque de fixation 37. Un vérin hydraulique 40, dont le corps du cylindre est relié à la base de la plaque de fixation 37 et la tige au montant supérieur 38 permet de relever l'ensemble du berceau 35 comportant le sabot de nettoyage 32. Il est ainsi possible de relever, comme l'illustre la figure 9, l'ensemble du dispositif de nettoyage pour la marche haut-le-pied par exemple. Le sabot 32 racle la surface du rail avec une force déterminée grâce aux vérins d'appui 34 permettant ainsi d'éliminer les déchets collés sur le rail. Les déchet sont ensuite évacués vers l'extérieur par l'intermédiaire des fentes 33.

## Revendications

1. Dispositif de mesure par ultrasons des défauts d'au moins un rail d'une voie ferrée, caractérisé par le fait qu'il comporte au moins un patin (1) muni d'une semelle (10), ce patin (1) étant monté sur la partie inférieure d'un cadre (12,21,22) et déplaçable verticalement par rapport à ce dernier grâce à des moyens de relevage et d'application (13) contre le rail; par le fait qu'il comporte des organes d'entraînement (14) reliant le cadre (12,21,22) au patin (1); par le fait qu'il comporte des organes de guidage latéral (23) du patin (1) par rapport au cadre (12,21,22) et par le fait que le patin (1) comporte au moins deux sondes (2) montées coulissantes dans des logements du patin (1) par l'intermédiaire d'organes d'appui (9).

2. Dispositif selon la revendication 1, caractérisé par le fait que les moyens d'application et de relevage du patin par rapport au cadre sont constitués par des vérins a double action (13).

3. Dispositif selon l'une des revendications précédentes, caractérisé par le fait que les organes d'appui (9) permettant le coulissement vertical des sondes par rapport au patin sont constitués par des vérins à pression réglable.

4. Dispositif selon la revendication 3, caractérisé par le fait que les vérins à pression réglable (9) sont asservis à la vitesse d'avancement du dispositif.

5. Dispositif selon l'une des revendications 1 à 2, caractérisé par le fait que les organes d'appui (9) permettant le coulissement vertical des sondes par rapport au patin sont constitués par des ressorts tarés.

6. Dispositif selon l'une des revendications précédentes, caractérisé par le fait que les organes d'entraînement (14) sont des organes élastiques.

7. Dispositif selon la revendication 6, caractérisé par le fait que les organes élastiques (14) sont constitués par des anneaux déformables en caoutchouc reliant le cadre (12,21,22) au patin (1).

8. Dispositif selon l'une des revendications précédentes, caractérisé par le fait que les organes de guidage du patin par rapport au rail sont constitués par des goupilles (23) solidaires du patin (1) coopérant avec des fentes situées dans les montants verticaux (21,22) du cadre (12,21,22).

9. Dispositif selon l'une des revendications précédentes, caractérisé par le fait que des conduits d'amenée (15) et de récupération (16) d'eau sont agencés dans le corps du patin (1) et débouchent respectivement dans des chambres d'amenée d'eau situées à l'avant des sondes et dans des chambres de récupération d'eau situées a l'arrière de chacune des sondes, les chambres étant délimitées par des découpes (19,20) pratiquées dans la semelle (10) du patin (1).

10. Dispositif selon l'une des revendications précédentes, caractérisé par le fait que des buses de giclage (24) sont agencées dans le corps du patin (1), et alimentées en eau par les conduits (15,16) pour permettre la projection d'un cône d'eau directement sur le rail.

11. Dispositif selon l'une des revendications précédentes, caractérisé par le fait que les découpes (19,20) de la semelle (10) du patin présentent dans leur partie centrale une forme correspondant à la forme des sondes se prolongeant vers l'avant et vers l'arrière par des découpes triangulaires.

12. Dispositif selon l'une des revendications précédentes, caractérisé par le fait que les sondes (2) sont montées sous une plaque de support (8) formant butée, dont les dimensions sont supérieures aux dimensions des logements dans lesquels les sondes coulissent.

13. Installation de mesure des défauts d'au moins un rail d'une voie ferrée, comportant un chariot d'auscultation (26) déplaçable verticalement par rapport au châssis du véhicule grâce à des moyens de relevage (27) et entraîné par le châssis, caractérisée par le fait que ledit chariot d'auscultation (26) comprend au moins un dispositif de mesure selon l'une des revendications précédentes.

14. Installation de mesure selon la revendication 13, caractérisée par le fait que le chariot d'auscultation (26) comporte des dispositifs de nettoyage (30,30') situés longitudinalement de part et d'autre des unités de mesure (1) et déplaçables verticalement par rapport au chariot (26) par l'intermédiaire d'organes de relevage (40).

15. Installation selon l'une des revendications 13 à 14, caractérisée par le fait que les dispositifs (30,30') de nettoyage comportent un sabot (32) monté dans un berceau (35), des moyens d'application (34) de ce sabot (32) contre le rail et des moyens d'entraînement élastiques du sabot (36).

16. Installation selon la revendication 15, caractérisée par le fait que le sabot (32) comporte plusieurs fentes (33) transversales permettant l'élimination des déchets.

17. Installation selon l'une des revendications 13 à 16, caractérisée par le fait qu'elle comporte des buses de nettoyage (31,31') montées sur le chariot d'auscultation (26) respectivement à l'avant et à l'arrière des dispositifs de nettoyage (30,30').

18. Installation selon la revendication 17, caractérisée par le fait que les buses de nettoyage (31,31') permettent de projeter un liquide à une pression comprise entre 100 et 150 bars en direction du rail avec un angle d'environ 15° par rapport à un plan vertical perpendiculaire aux rails.

19. Installation selon l'une des revendications 13 à 18, caractérisée par le fait que l'alimentation basse pression des buses de giclage (24) et l'alimentation haute pression des buses de nettoyage (30,30') est asservie à la vitesse d'avancement de l'installation.

## Claims

1. An ultrasonic measuring device of defaults of at least one rail of a railway, characterized in that it includes at least one shoe (1) provided with a pad (10), this shoe (1) being mounted on the lower part of a frame (12, 21, 22) and movable vertically relative to the latter by means (13) for lifting and applying the same against the rail; in that it includes drive members (14) connecting the frame (12, 21, 22) to the shoe (1); in that it includes members (23) for guiding the shoe (1) laterally relative to the frame (12, 21, 22) and in that the shoe (1) includes at least two probes (2) mounted slidably in housings for the shoe (1) via biasing members (9).

2. A device according to claim 1, characterized in that the means for applying and lifting the shoe relative to the frame are comprised of double effect jacks (13).

3. A device according to one of the preceding claims, characterized in that the biasing members (9) making possible the vertical sliding motion of the probes relative to the shoe are comprised of jacks of which the pressure can be adjusted.

4. A device according to claim 3, characterized in that the adjustable pressure jacks (9) are controlled by the speed of progression of the device.

5. A device according to one of claims 1 to 2, characterized in that the biasing members (9) making possible a vertical sliding motion of the probes relative to the shoe are comprised of calibrated springs.

6. A device according to one of the preceding claims, characterized in that the drive members (14) are resilient members.

7. A device according to claim 6, characterized in that the resilient members (14) are comprised of deformable rubber rings connecting the frame (12, 21, 22) to the shoe (1).

8. A device according to one of the preceding claims, characterized in that the members for guiding the shoe relative to the rail are comprised of rods (23) affixed to the shoe (1) and cooperating with slots provided in the vertical struts (21, 22) of the frame (12, 21, 22).

9. A device according to one of the preceding claims, characterized in that water supply conduits (15) and water recovery conduits (16) are arranged in the body of the shoe (1) and open respectively into water supply chambers located in front of the probes and into water recovery chambers located behind each one of the probes, the chambers being defined by cutouts (19, 20) made in the pad (10) of the shoe (1).

10. A device according to one of the preceding claims, characterized in that spray nozzles (24) are provided in the body of the shoe (1) and are supplied with water by the conduits (15, 16) for spraying a cone of water directly on the rail.

11. A device according to one of the preceding claims, characterized in that the cutouts (19, 20) of the pad (10) of the shoe have a shape corresponding to the shape of the probes in their central section and a triangular shape in their front end and rear end sections.

12. A device according to one of the preceding claims, characterized in that the probes (2) are mounted under a support plate (8) forming a stop, the dimensions of which are greater than the dimensions of the housings in which the probes are slidably mounted.

13. An installation for measuring the defaults of at least one rail of a railway, including an inspection carriage (26) movable vertically relative to the underframe of the vehicle by lifting means (27) and pulled by the underframe, characterized in that said inspection carriage (26) comprises, at least, one measuring device according to one of the preceding claims.

14. A measuring installation according to claim 13, characterized in that the inspection carriage (26) includes cleaning devices (30, 30') situated longitudinally on both sides of the measuring units (1) and movable vertically relative to the carriage (26) by lifting members (40).

15. An installation according to one of claims 13 to 14, characterized in that the cleaning devices (30, 30') include a pad (32) mounted in a cradle (35), means (34) for applying this pad (32) against the rail and resilient drive means (36) for the pad.

16. An installation according to claim 15, characterized in that the shoe (32) has several transverse slots (33) making it possible to eliminate debris.

17. An installation according to one of the claims 13 to 16, characterized in that it includes cleaning nozzles (31, 31') mounted on the inspection carriage (26), respectively in front and behind the cleaning devices (30, 30').

18. An installation according to claim 17, characterized in that the cleaning nozzles (31, 31') make it possible to project a liquid under a pressure comprised between 100 and 150 bars in the direction of the rail under an angle of about 15° relative to a vertical plane perpendicular to the rails.

19. An installation according to one of claims 13 to 18, characterized in that the low pressure supplied to the spray nozzles (24) and the high pressure supplied to the cleaning nozzles (30, 30') are controlled by the speed of progression of the installation.

## Patentansprüche

1. Ultraschallmessvorrichtung für Fehler in zumindest einer Eisenbahnschiene, dadurch gekennzeichnet, dass sie zumindest einen mit einer Fussplatte (10) versehenen Gleitschuh (1) umfasst, der am Unterteil eines Rahmens (12, 21, 22) montiert und in der Senkrechten relativ zum Rahmen durch Huborgane und Organe (13) zum Andruck an die Schiene verschoben werden kann; dadurch, dass sie Mitnahmeorgane (14) umfasst, die den Rahmen (12, 21, 22) mit dem Gleitschuh (1) verbinden; dadurch, dass sie Organe (23) zur seitlichen Führung des Gleitschuhs (1) relativ zum Rahmen (12, 21, 22) umfasst, und dadurch, dass der Gleitschuh (1) zumindest zwei Sonden (2) umfasst, die über Stützorgane (9) gleitend in Lager des Gleitschuhs (1) eingebaut sind.

2. Vorrichtung gemäss Anspruch 1, dadurch gekennzeichnet, dass die Mittel für den Andruck und für ein Anheben des Gleitschuhs relativ zum Rahmen aus doppelt wirkenden Schraubenwinden (13) bestehen.

3. Vorrichtung gemäss einem der vorangehenden Ansprüche, dadurch gekennzeichnet, dass die Stützorgane (9), die das Gleiten der Sonden in der Senkrechten relativ zum Gleitschuh gestatten, aus Winden mit einstellbarem Druck bestehen.

4. Vorrichtung gemäss Anspruch 3, dadurch gekennzeichnet, dass die Winden (9) mit einstellbarem Druck über die Vorschubgeschwindigkeit der Vorrichtung gesteuert werden.

5. Vorrichtung gemäss einem der Ansprüche 1 bis 2, dadurch gekennzeichnet, dass die Stützorgane (9), die das Gleiten der Sonden in der Senkrechten relativ zum Gleitschuh gestatten, aus tarierten Federn bestehen.

6. Vorrichtung gemäss einem der vorangehenden Ansprüche, dadurch gekennzeichnet, dass die Mitnahmeorgane (14) elastische Organe sind.

7. Vorrichtung gemäss Anspruch 6, dadurch gekennzeichnet, dass die elastischen Organe (14) aus deformierbaren Gummiringen bestehen, die den Rahmen (12, 21, 22) mit dem Gleitschuh (1) verbinden.

8. Vorrichtung gemäss einem der vorangehenden Ansprüche, dadurch gekennzeichnet, dass die Organe für die Führung des Gleitschuhs relativ zur Schiene aus mit dem Gleitschuh (1) fest verbundenen Bolzen (23) bestehen, die mit Schlitzen zusammenwirken, die sich in den senkrechten Stützen (21, 22) des Rahmens (12, 21, 22) befinden.

9. Vorrichtung gemäss einem der vorangehenden Ansprüche, dadurch gekennzeichnet, dass Zuleitungen (15) und Leitungen für Wasserrückgewinnung (16) im Körper des Gleitschuhs (1) eingebaut sind und in Wasserzufuhrkammern, die sich vor den Sonden befinden, bzw. Wasserrückgewinnungskammern, die sich hinter jeder der Sonden befinden, münden, wobei diese Kammern durch Ausschnitte (19, 20) begrenzt werden, die in der Fussplatte (10) des Gleitschuhs (1) angebracht sind.

10. Vorrichtung gemäss einem der vorangehenden Ansprüche, dadurch gekennzeichnet, dass Spritzdüsen (24) im Körper des Gleitschuhs (1) eingelassen sind und durch die Leitungen (15, 16) mit Wasser versorgt werden, damit ein Wasserkegel direkt auf die Schiene gerichtet werden kann.

11. Vorrichtung gemäss einem der vorangehenden Ansprüche, dadurch gekennzeichnet, dass die Ausschnitte (19, 20) der Fussplatte (10) des Gleitschuhs in ihrem mittleren Abschnitt eine der Gestalt der Sonden entsprechende Gestalt aufweisen und sich nach vorn und hinten in dreieckigen Ausschnitten fortsetzen.

12. Vorrichtung gemäss einem der vorangehenden Ansprüche, dadurch gekennzeichnet, dass die Sonden (2) unter eine einen Anschlag bildende Tragplatte (8) montiert sind, deren Abmessungen grösser als die Abmessungen der Lager sind, in denen die Sonden gleiten.

13. Messanlage für Fehler in zumindest einer Eisenbahnschiene mit einem Schallprüfwagen (26), der durch Huborgane (27) relativ zum Fahrzeuggestell senkrecht verschoben werden kann und durch das Gestell mitgeführt wird, dadurch gekennzeichnet, dass der benannte Schallprüfwagen (26) zumindest eine Messvorrichtung gemäss einem der vorangehenden Ansprüche umfasst.

14. Messanlage gemäss Anspruch 13, dadurch gekennzeichnet, dass der Schallprüfwagen (26) Reinigungsvorrichtungen (30, 30') umfasst, die sich in Längsrichtung zu beiden Seiten der Messeinheiten (1) befinden und durch Huborgane (40) relativ zum Wagen (26) in der Senkrechten verschoben werden können.

15. Anlage gemäss einem der Ansprüche 13 bis 14, dadurch gekennzeichnet, dass die Reinigungsvorrichtungen (30, 30') einen in eine Glocke (35) eingebauten Schlitten (32), Organe (34) zum Andrücken dieses Schlittens (32) an die Schiene und elastische Schlittenmitführorgane (36) umfassen.

16. Anlage gemäss Anspruch 15, dadurch gekennzeichnet, dass der Schlitten (32) mehrere Querspalte (33) hat, die es gestatten, Abfälle wegzuleiten.

17. Anlage gemäss einem der Ansprüche 13 bis 16, dadurch gekennzeichnet, dass sie Reinigungsdüsen (31, 31') umfasst, die vor bzw. hinter den Reinigungsvorrichtungen (30, 30') auf den Schallprüfwagen (26) montiert sind.

18. Anlage gemäss Anspruch 17, dadurch gekennzeichnet, dass durch die Reinigungsdüsen (31, 31') ein Flüssigkeitsstrahl mit einem Druck zwischen 100 und 150 bar unter einem Winkel von etwa 15° gegen eine zu den Schienen senkrechte Ebene auf die Schiene gerichtet werden kann.

19. Anlage gemäss einem der Ansprüche 13 bis 18, dadurch gekennzeichnet, dass die Niederdruckspeisung der Spritzdüsen (24) und die Hochdruckspeisung der Reinigungsdüsen (30, 30') über die Vorschubgeschwindigkeit der Anlage gesteuert werden.
